Europäisches Patentamt

European Patent Office

Office européen des brevets

(11) Publication number: **0 460 875 A1**

(12) **EUROPEAN PATENT APPLICATION**

(21) Application number: **91304928.4**

(22) Date of filing: **31.05.91**

(51) Int. Cl.⁵: **B60P 1/34**

(30) Priority: **31.05.90 GB 9012147**

(43) Date of publication of application:
**11.12.91 Bulletin 91/50**

(84) Designated Contracting States:
**AT BE CH DE DK ES FR GR IT LI LU NL SE**

(71) Applicant: **Pocklington, Alfred Tom**
**27 East Road**
**Bishop's Stortford, Hertfordshire CM23 5JG**
**(GB)**
Applicant: **Morrison, Kenneth George**
**27 East Road**
**Bishop's Stortford, Hertfordshire CM23 5JG**
**(GB)**

(72) Inventor: **Pocklington, Alfred Tom**
**27 East Road**
**Bishop's Stortford, Hertfordshire CM23 5JG**
**(GB)**
Inventor: **Morrison, Kenneth George**
**27 East Road**
**Bishop's Stortford, Hertfordshire CM23 5JG**
**(GB)**

(74) Representative: **Green, Alan James et al**
**Hepworth Lawrence Bryer & Bizley, Gate**
**House South, West Gate**
**Harlow, Essex CM20 1JN (GB)**

(54) **Skip assembly.**

(57) The skip assembly (11) is mounted on the front of a dumper truck or the like. The assembly comprises a skip (12) mounted on or at or adjacent a front wall (14) thereof for tipping by movement about a pair of pivots (18). Each of the pivots is respectively associated with one end of a pair of lifting arms (23), which in their turn are constructed and arranged to pivot on the chassis (33) of the dumper truck between lower and upper positions. In the lower position of the lifting arms the skip sits within a cradle defined by the lifting arms. In the upper positions of the lifting arms the skip is lifted clear of the lifting arms. The invention includes a vehicle including mounted on the chassis thereof a skip assembly as defined above, such a vehicle having the advantage of being operable within a confined space.

EP 0 460 875 A1

FIG.1

The present invention relates to a skip assembly, in particular to an assembly of a skip or bucket and lifting and tipping arms for use mounted on the front of a dumper truck or the like.

According to the invention there is provided a skip assembly for use mounted on the front of a dumper truck or the like, which assembly comprises a skip mounted on or at or adjacent a front wall thereof for tipping by movement about a pair of pivots each respectively associated with one end of a pair of lifting arms, the lifting arms in their turn being constructed and arranged to pivot on the chassis of the dumper truck between lower and upper positions, the skip in the lower position of the lifting arms sitting within a cradle defined by the lifting arms and in the upper position of the lifting arms being lifted clear of the lifting arms.

In the assembly of the invention the skip (or bucket) may be of any convenient or conventional shape or size. Preferably, however, the skip comprises a base wall and front and rear walls extending upwardly and outwardly therefrom. Thus, typically the skip may take the shape of an oblong bucket, with the area defined by the base wall smaller than the area at the upper mouth of the bucket. That is to say the skip may have a trapezoid shape when viewed from the side.

Preferably, in the assembly of the invention the skip includes a pair of pivot elements extending from a front wall thereof at or adjacent a juncture with a base wall of said skip. Preferably also, each lifting arm comprises a main portion and a front portion extending away from the main portion at an obtuse angle thereto.

More preferably, in the assembly of the invention each front portion has pivoted at its end remote from each main portion a compensator arm to or at or adjacent an end of which one of said pair of pivots is connected. Also, it is preferred that each compensator arm should comprise a pair of wings set at an obtuse angle to each other. In addition, each compensator arm is preferably pivoted to each front portion about a pivot set at or adjacent the junction of the pair of wings.

In one preferred embodiment of the assembly of the invention a tipping ram is provided pivotally connected at one end to said one end of one of said pair of lifting arms and at its other end to a pivot at or adjacent the juncture of the skip base wall and the skip rear wall. Preferably also, a lifting ram is provided pivotally connected to the lifting arms and arranged to be pivotally connected to the dumper truck or the like chassis.

More preferably, in the skip assembly of the invention there is provided one or more stabilizer arms, typically a stabilizer arm pivoted at one end of each wing of the compensator arms remote from said pivots and arranged at the other end to be pivotally connected to the dumper truck or the like chassis.

Preferably in the assembly of the invention at least a major part of each lifting arm e.g. the main portion, is at least essentially horizontal in the upper position. Preferably also in the lower position each lifting arm extends downwardly from its chassis pivot.

The invention includes a vehicle such as a dumper truck or the like including mounted on the chassis thereof at the front of the vehicle a skip assembly in accordance with the invention.

The invention will now be described by way of example only with reference to the accompanying drawings in which:

Figure 1 is a diagrammatic representation of one form of skip assembly in accordance with the invention from one side and in a lower (closed) position;

Figure 2 is a diagrammatic representation of the skip assembly of Figure 1 from the same one side and in an upper (lifted) position; and

Figures 3 and 4 show a skip assembly in accordance with the invention mounted on one form of dumper truck in upper and lower positions.

Referring to the drawings, the skip assembly 11 shown comprises a skip or bucket 12 comprising a base wall 13 and extending upwards and outwards therefrom front and rear walls 14 and 15 as shown. On the front wall 14 at or adjacent where the wall 14 extends from the base wall 13 is a pair of pivot members 16 (only one shown) each of which is associated with a compensator arm 17 (only one shown) via a pivot element 18.

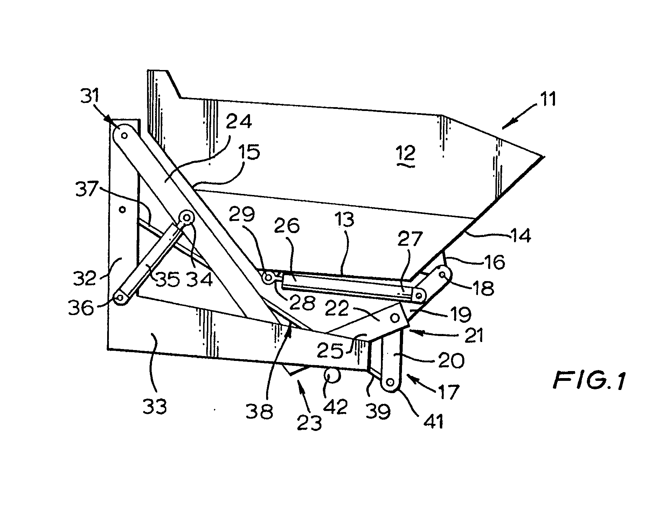

Each compensator arm 17 comprises two wings 19 and 20 set at an obtuse angle to each other, and at the junction 21 of the wings 19 and 20 each arm 17 is pivoted to one end 22 of one of a pair of lifting arms 23 (only one shown). Each lifting arm 23 comprises a main portion 24 which in the closed (lower) position shown in Figure 1 runs along the length of skip rear wall 15 and beneath skip base wall 13. That main portion 24 in its turn connects to a front portion 25 extending away from the main portion at an obtuse angle and including said one end 22. In the lower position shown in Figure 1 the skip sits within a cradle formed by the pair of lifting arms as shown, and can be tipped forward of the lifting arms 23 by a pair of tipping rams 26 (only one shown). Each ram 26 is pivotally connected at one end 27 midway along wing 19 of compensator arm 17 and at its other end 28 to a pivot member 29 (only one shown) at or adjacent the juncture between skip base wall 13 and skip rear wall 15. The tipping operatiron is accomplished in the lower position shown by activating rams 26 to extend them and to cause skip 12 to pivot about pivot element 18 and to tip forward.

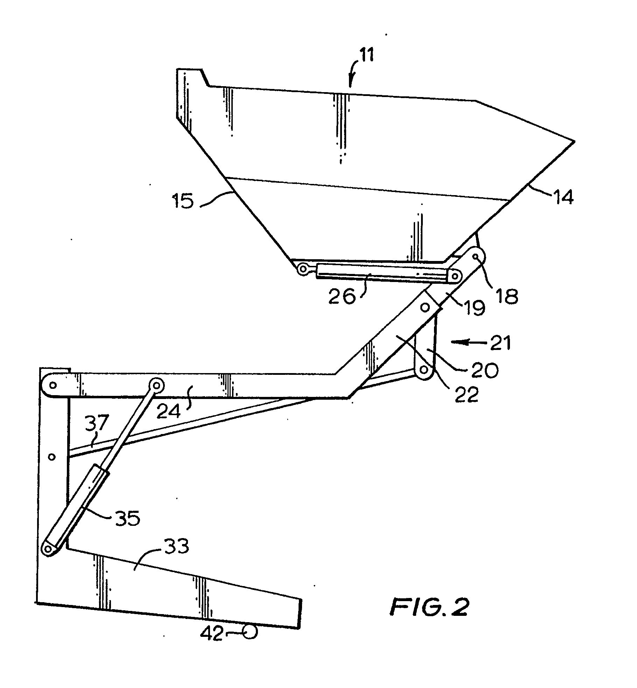

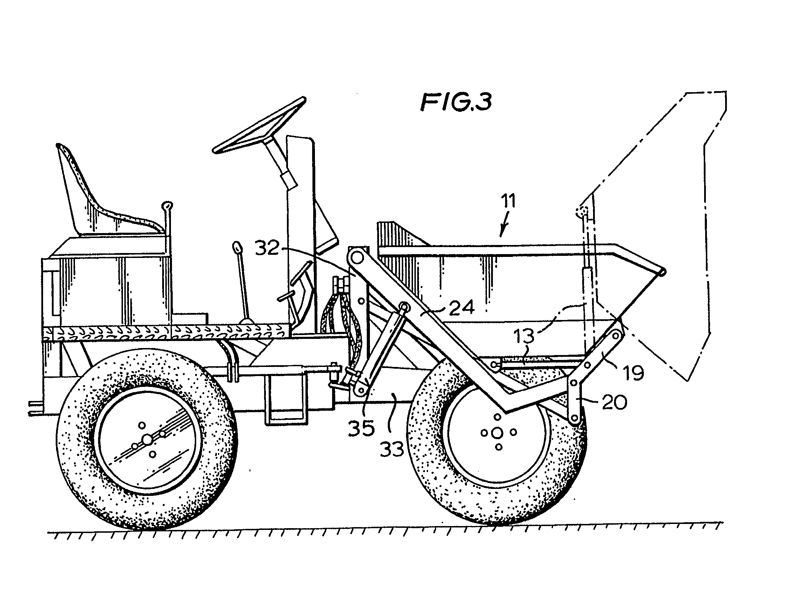

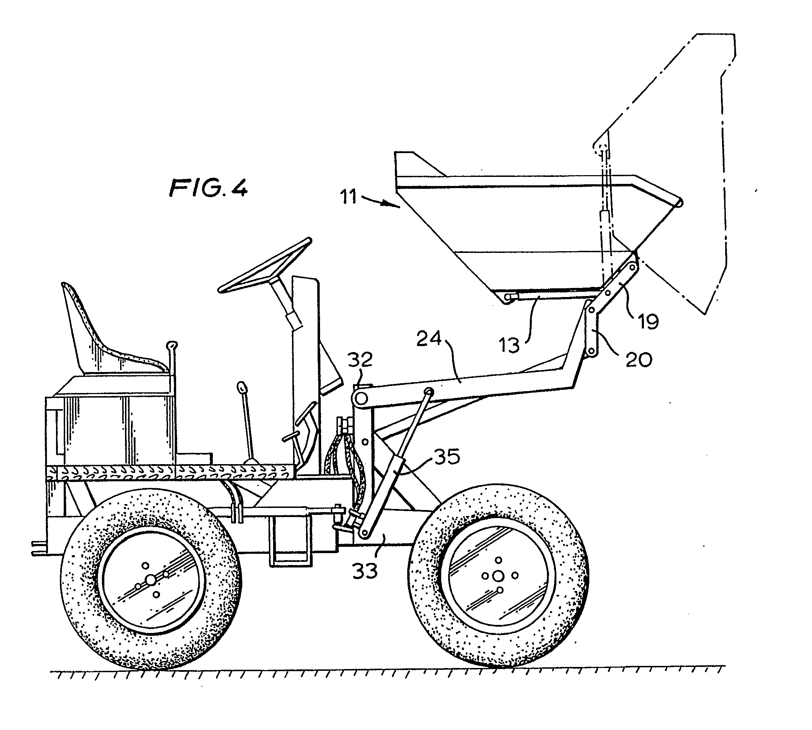

As shown in Figures 1 and 2 the lifting arms 23 are pivoted at one end 31 of each main portion 24 to an upwardly extending arm 32 of the main chassis 33 of the dumper or like truck (see Figures 3 and 4) on which the skip assembly 11 is mounted. In addition, each main portion 24 of each lifting arm 23 has pivotally mounted thereon and spaced away from one end 31, an end 34 of a lifting ram 35, the other end 36 of which is pivotally mounted at or adjacent the base of the upwardly extending arm 32. Also, at least essentially mid-way along upwardly extending arm 32 there is pivoted one end 37 of a stabilizer bar 38, the other end 39 of which is pivoted to a lower end 41 of wing 20 of compensator arm 17.

In use, the operation of the assembly 11 is as follows. First, the lifting rams 35 are operated and hydraulically extended to lift arms 23 to the position shown in Figure 2 where each main portion 24 of each arm 23 is essentially horizontal. In that position the skip 12 is lifted clear of the arms 23 and is held stable in the position shown in Figure 2 by virtue of stabilizer bars 38, compensator arms 17 and tipping rams 26. Again, however, tipping can be effected in that upper position by operation of rams 26 to push the skip 12 over pivot element 18.

As can be seen from Figures 1 to 4 the skip 12 is always in both its lower and upper positions close to the fulcrum provided by the front axle 42 of the dumper truck (see Figures 3 and 4). Accordingly, tipping operations can be achieved in both lower and upper positions essentially without the risk of tipping forward the dumper truck itself. Furthermore, the whole operatiron of the assembly is confined within a relatively small area, thus enabling a dumper on which it is mounted to be worked within a confined space.

It is, of course, to be understood that the invention is not limited to the specific details of the assembly described above. Thus, in practicising the invention numerous variations and modifications may be made within the spirit and scope of the claims which follow.

## Claims

1. A skip assembly for use mounted on the front of a dumper truck or the like, which assembly 11 comprises a skip 12 mounted on or at or adjacent a front wall 14 thereof for tipping by movement about a pair of pivots 18 each respectively associated with one end of a pair of lifting arms 23, the lifting arms 23 in their turn being constructed and arranged to pivot on the chassis 32, 33 of the dumper truck between lower and upper positions, the skip 12 in the lower position of the lifting arms 23 sitting within a cradle defined by the lifting arms 23 and in the upper position of the lifting arms 23 being lifted clear of the lifting arms.

2. An assembly according to claim 1, wherein the skip 12 comprises a base wall 13 and front and rear walls 14, 15 extending upwardly and outwardly therefrom.

3. An assembly according to claim 1 or claim 2, wherein the skip 12 includes a pair of pivot elements 18 extending from a front wall 14 thereof at or adjacent a juncture with a base wall 13 of said skip 12.

4. An assembly according to any one of the preceding claims, wherein each lifting arm 23 comprises a main portion 24 and a front portion 25 extending away from the main portion 24 at an obtuse angle thereto each front portion 25 preferably having pivoted at its end remote from each main portion 24 a compensator arm 17 to or at or adjacent an end of which one of said pair of pivots 18 is connected.

5. As assembly according to claim 4, wherein each compensator arm 17 comprises a pair of wings 19, 20 set at an obtuse angle to each other, each compensator arm 17 preferably being pivoted to each front portion 25 about a pivot set at or adjacent the junction of the pair of wings 19, 20.

6. As assembly according to any one of the preceding claims, wherein a tipping ram 26 is provided pivotally connected at one end to said one end of one of said pair of lifting arms 23 and at is other end to a pivot 29 at or adjacent the juncture of the skip base wall 13 and the skip rear wall 15.

7. An assembly according to any one of the preceding claims, wherein a lifting ram 35 is provided pivotally connected to the lifting arms 23 and arranged to be pivotally connected to the dumper truck or the like chassis 32, 33.

8. An assembly according to any one of the preceding claims, which includes one or more stabilizer arms 37, preferably a stabilizer arm 37 pivoted at one end of each wing 20 of the compensator arms 17 remote from said pivots 18 and arranged at its other end to be pivotally connected to the dumper truck or the like chassis 32, 33.

9. An assembly according to any one of the preceding claims, wherein in the upper position at least a major part of each lifting arm 23 is at least essentially horizontal.

10. An assembly according to any one of the preceding claims, wherein in the lower position each lifting arm 23 extends downwardly from its chassis pivot.

11. A vehicle including mounted on the chassis 32, 33 thereof at the front of the vehicle a skip assembly 11 according to any one of the preceding claims, the vehicle preferably being a dumper truck.

FIG.1

EP 0 460 875 A1

FIG.2

6

FIG.3

EP 0 460 875 A1

FIG.4

European Patent Office

**EUROPEAN SEARCH REPORT**

Application Number

EP 91 30 4928

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1448968 (M.PIERRE ET AL.)<br>* the whole document * | 1-8, 10, 11 | B60P1/34 |
| X | GB-A-2169576 (ROUGHNECK EXCAVATORS)<br>* the whole document * | 1-3, 5-8, 10, 11 | |
| X | DE-B-1580489 (ORENSTEIN & KOPPEL)<br>* column 1, line 48 - column 2, line 46; figures 1, 2 * | 1, 2 | |
| A | US-A-2432472 (HASTINGS)<br>* figures 1-6 * | 1 | |
| | | | TECHNICAL FIELDS SEARCHED (Int. Cl.5) |
| | | | B60P<br>B65G |

The present search report has been drawn up for all claims

| Place of search | Date of completion of the search | Examiner |
|---|---|---|
| BERLIN | 05 SEPTEMBER 1991 | SIMON, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)